# EUROPEAN PATENT APPLICATION

(11) **EP 4 845 079 A1**
(43) Date of publication of application: **25.11.2026**
(21) Application number: 24921780.3
(22) Date of filing: 20.12.2024
(51) Int. Cl.: H04L 5/00, H04W 72/04

(54) **COMMUNICATION METHOD AND COMMUNICATION APPARATUS**

(30) Priority: 31.01.2024 CN 202410157222
(71) Applicant: Huawei Technologies Co., Ltd., Shenzhen, Guangdong 518129 (CN)
(72) Inventor: CHEN, Hongzhi, Shenzhen, Guangdong 518129 (CN); SUN, Yan, Shenzhen, Guangdong 518129 (CN); XUE, Songyan, Shenzhen, Guangdong 518129 (CN)
(74) Representative: Huawei European IPR
(86) International application number: PCT/CN2024/140860
(87) International publication number: WO 2025/161758

(57) **Abstract**

A communication method and a communication apparatus are provided, and relate to the field of communication technologies. In the method, a first time-frequency resource used to carry a sequence of a first signal can be further used to carry first data, and the first signal is used to demodulate the first data. A second apparatus indicates information about the first time-frequency resource to a first apparatus, and the first apparatus determines the sequence of the first signal based on the information about the first time-frequency resource, and demodulates the first data based on the first signal. When a first time-domain resource can be used to carry both the first data and the sequence of the first signal, types and a quantity of patterns of the first time-frequency resource can be extended, so that appropriate channel estimation can be performed on a time-frequency resource occupied for data transmission in a flexible, changing, and complex channel environment.

## Description

This application claims priority to Chinese Patent Application No. 202410157222.8, filed with the China National Intellectual Property Administration on January 31, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A demodulation reference signal (demodulation reference signal, DMRS) can be used for data demodulation, that is, channel estimation may be performed, by using the DMRS, on a time-frequency resource occupied for data transmission. An association relationship exists between accuracy of channel estimation on the time-frequency resource occupied for the data transmission and a resource density of the DMRS. For example, when a channel shows severe frequency selectivity, the resource density of the DMRS in frequency domain needs to be increased; or when a channel changes quickly in time domain, the resource density of the DMRS in time domain needs to be increased.

Currently, a pattern of time-frequency resources used to carry a DMRS sequence may be configured in a protocol-predefined manner or in an artificial intelligence (artificial intelligence, AI) manner. However, the foregoing solution cannot be applied to a flexible, changing, and complex wireless environment. Therefore, in the flexible, changing, and complex wireless environment, how to perform appropriate channel estimation on time-frequency resources occupied for data transmission is a technical problem to be urgently resolved currently.

### SUMMARY

This application provides a communication method and a communication apparatus, to support appropriate channel estimation on a time-frequency resource occupied for data transmission in a flexible, changing, and complex wireless environment.

According to a first aspect, a communication method is provided. The communication method includes: receiving first information, where the first information indicates information about a first time-frequency resource, the first time-frequency resource is used to carry a sequence of a first signal and first data, and the first signal is used to demodulate the first data; and determining the information about the first time-frequency resource based on the first information.

An execution body of the solution in the first aspect may be a first apparatus, or may be a module (for example, a chip system) of the first apparatus, or may be a logical node, a logical module, or software that can implement all or some functions of the first apparatus. This is not limited. For ease of description, the following uses the first apparatus as an example for description.

In the foregoing solution, the first signal and the first data may be carried on a same first time-frequency resource. The first apparatus may determine the sequence of the carried first signal based on the information about the first time-frequency resource, and can perform channel estimation based on the sequence of the first signal.

When the first time-frequency resource can be used to carry both the data and the sequence of the first signal, compared with a solution in which the first time-frequency resource can be used to carry only the data or the sequence of the first signal, a quantity and types of time-frequency resources used to carry the sequence of the first signal can be extended, so that more appropriate channel estimation can be performed on a time-frequency resource occupied for data transmission in a flexible, changing, and complex wireless environment.

According to the first aspect, the method may further include: receiving a reference signal; and sending measurement information of the reference signal, where an association relationship exists between the first information and the measurement information of the reference signal.

After the first apparatus receives the reference signal, the first apparatus sends the measurement information of the reference signal to a second apparatus. The second apparatus may determine the corresponding first time-frequency resource based on a channel condition between the first apparatus and the second apparatus that is indicated by the measurement information of the reference signal, and the first apparatus may perform channel estimation by using the corresponding first signal.

According to the first aspect, the method may further include: performing channel estimation based on the first signal.

In this way, the first apparatus may perform channel estimation by using the first signal, so that data demodulation on the first data can be supported.

According to a second aspect, a communication method is provided. The communication method includes: determining first information, where the first information indicates information about a first time-frequency resource, the first time-frequency resource is used to carry a sequence of a first signal and first data, and the first signal is used to demodulate the first data; and sending the first information.

An execution body of the solution in the second aspect may be a second apparatus, or may be a module (for example, a chip system) of the second apparatus, or may be a logical node, a logical module, or software that can implement all or some functions of the second apparatus. This is not limited. For ease of description, the following uses the second apparatus as an example for description.

Refer to descriptions of beneficial effects of the first aspect.

According to the second aspect, the method may further include: sending a reference signal; and receiving measurement information of the reference signal, where an association relationship exists between the first information and the measurement information of the reference signal.

With reference to the method according to either of the first aspect and the second aspect, the first information includes at least one of the following:
identification information of a pattern of the first time-frequency resource;
length information of the sequence of the first signal;
information obtained by compressing the pattern of the first time-frequency resource;
a mapping relationship between the first time-frequency resource and the sequence of the first signal;
a start location corresponding to the first time-frequency resource;
an end location corresponding to the first time-frequency resource;
a quantity of resources of the first time-frequency resource in frequency domain; or
a quantity of resources of the first time-frequency resource in time domain.

The first apparatus may determine the information about the first time-frequency resource by using one or more of the foregoing items, to determine a corresponding sequence of the first signal.

With reference to the method according to either of the first aspect and the second aspect, the mapping relationship between the first time-frequency resource and the sequence of the first signal includes: mapping in frequency domain first and then in time domain, or mapping in time domain first and then in frequency domain.

When the first apparatus determines the mapping relationship between the first time-frequency resource and the sequence of the first signal, the first apparatus may determine a specific arrangement manner of the first time-frequency resource.

With reference to the method according to either of the first aspect and the second aspect, the first time-frequency resource includes at least two consecutive time-domain symbols and at least two consecutive subcarriers, or the first time-frequency resource includes one time-domain symbol and at least two consecutive subcarriers, or the first time-frequency resource includes one subcarrier and at least one consecutive symbol.

In this way, types and a quantity of patterns of the first time-frequency resource can be increased, so that more appropriate channel estimation can be performed on a time-frequency resource occupied for data transmission in a flexible, changing, and complex wireless environment.

With reference to the method according to either of the first aspect and the second aspect, a start time-domain symbol in the at least two consecutive time-domain symbols includes one or more time-domain symbols in one slot; or an end time-domain symbol in the at least two consecutive time-domain symbols includes one or more time-domain symbols in one slot.

In this way, types and a quantity of patterns of the first time-frequency resource can be increased, so that more appropriate channel estimation can be performed on a time-frequency resource occupied for data transmission in a flexible, changing, and complex wireless environment.

With reference to the method according to either of the first aspect and the second aspect, the first time-frequency resource is further used to carry a sequence of at least one second signal and at least one piece of second data, a root sequence of the sequence of the first signal is different from a root sequence of the sequence of the second signal, and the second signal is used to demodulate the second data.

When the first time-frequency resource is used to carry sequences of a plurality of signals, resource utilization of the first time-frequency resource can be improved. In addition, for a sequence of each signal, a quantity and types of patterns of a time-frequency resource corresponding to the sequence of each signal can be extended, so that more appropriate channel estimation can be performed on a time-frequency resource occupied for data transmission in a flexible, changing, and complex wireless environment.

With reference to the method according to either of the first aspect and the second aspect, the first data corresponds to a first layer, the second data corresponds to a second layer, and the first layer is different from the second layer.

In this way, in embodiments of this application, appropriate channel estimation in a two-stream scenario can be supported.

With reference to the method according to either of the first aspect and the second aspect, the first time-frequency resource is located in one or more resource blocks corresponding to a first time-domain resource, and the first time-domain resource includes one or more time-domain symbols in one or more slots.

When the first time-frequency resource may be located in one or more resource blocks, types and a quantity of patterns of the first time-frequency resource can be increased, so that more appropriate channel estimation can be performed on a time-frequency resource occupied for data transmission in a flexible, changing, and complex wireless environment.

With reference to the method according to either of the first aspect and the second aspect, the first data includes at least one of control data and user data.

When the first data includes the control data, the first signal can be used to demodulate the control data.

When the first data includes the user data, the first signal can be used to demodulate the user data.

When the first data includes the control data and the user data, the first signal can be used to demodulate the control data and the user data.

According to a third aspect, a communication apparatus is provided. The communication apparatus may be a first apparatus, or may be a device, a module, or the like configured to perform a function of the first apparatus.

In a possible implementation, the communication apparatus may include modules or units that are in one-to-one correspondence with the methods/operations/steps/actions described in the first aspect. The modules or units may be implemented by a hardware circuit, software, or a combination of the hardware circuit and the software.

The first apparatus may be a terminal device, or may be a network device. This is not limited.

According to a fourth aspect, a communication apparatus is provided. The communication apparatus may be a second apparatus, or may be a device, a module, or the like configured to perform a function of the second apparatus.

In a possible implementation, the communication apparatus may include modules or units that are in one-to-one correspondence with the methods/operations/steps/actions described in the second aspect. The modules or units may be implemented by a hardware circuit, software, or a combination of the hardware circuit and the software.

The second apparatus may be a network device, or may be a terminal device.

According to a fifth aspect, a communication apparatus is provided. The communication apparatus includes a processor. The processor is configured to cause, by executing a computer program or instructions or through a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a sixth aspect, a communication apparatus is provided. The communication apparatus includes a logic circuit and an input/output interface. The input/output interface is configured to input and/or output a signal. The logic circuit is configured to perform the method according to any one of the first aspect and the possible implementations of the first aspect; or the logic circuit is configured to perform the method according to any one of the second aspect and the possible implementations of the second aspect.

According to a seventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided. The computer program product includes instructions. When the instructions are run on a computer, the method according to any one of the first aspect and the possible implementations of the first aspect is performed, or the method according to any one of the second aspect and the possible implementations of the second aspect is performed.

According to a ninth aspect, a chip system is provided. The chip system includes a processor. The processor is configured to execute a computer program or instructions in a memory, to cause the chip system to implement the method according to any one of the first aspect and the possible implementations of the first aspect; or to cause the chip system to implement the method according to any one of the second aspect and the possible implementations of the second aspect.

For descriptions of beneficial effects of any one of the third aspect to the ninth aspect, refer to descriptions of beneficial effects of the first aspect and the second aspect. Details are not described again.

### BRIEF DESCRIPTION OF DRAWINGS

FIG. 1 is a diagram of an application framework to which an embodiment of this application is applicable;
FIG. 2 is a diagram of another application framework to which an embodiment of this application is applicable;
FIG. 3 is a diagram of a communication system to which an embodiment of this application is applicable;
FIG. 4 is a diagram of another communication system to which an embodiment of this application is applicable;
FIG. 5 is a schematic interaction flowchart of a communication method according to an embodiment of this application;
FIG. 6a, FIG. 6b, and FIG. 6c are diagrams of a relationship among a first signal, first data, and a first time-frequency resource;
FIG. 7 is a diagram of a pattern of a first time-frequency resource according to an embodiment of this application;
FIG. 8 is another diagram of a pattern of a first time-frequency resource according to an embodiment of this application;
FIG. 9 is still another diagram of a pattern of a first time-frequency resource according to an embodiment of this application;
FIG. 10 is yet another diagram of a pattern of a first time-frequency resource according to an embodiment of this application;
FIG. 11 is a diagram of a communication apparatus according to an embodiment of this application; and
FIG. 12 is another diagram of a communication apparatus according to an embodiment of this application.

### DESCRIPTION OF EMBODIMENTS

The following describes technical solutions of this application with reference to accompanying drawings.

The following describes technical solutions of this application with reference to accompanying drawings.

For ease of understanding of embodiments of this application, the following descriptions are provided first.
1. In this application, unless otherwise specified, "a plurality of" means two or more.
2. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean an execution order, and the execution order of processes should be determined based on functions and internal logic of the processes. For example, in this specification, the claims, and the accompanying drawings of this application, the terms "first", "second", "third", "fourth", and various other term numerals (if exists) are intended to distinguish between similar objects, but do not necessarily indicate a specific order or sequence. Data used in such a way is interchangeable in appropriate circumstances, so that embodiments described herein can be implemented in other orders than the order illustrated or described herein.

In addition, any embodiment or design solution described as an "example" or "for example" in this application should not be explained as being more preferred or having more advantages than another embodiment or design solution. Exactly, use of the words such as "example" or "for example" is intended to present a relative concept in a specific manner for ease of understanding.

4. The terms "include", "have", and any variants thereof are intended to cover a nonexclusive inclusion. For example, a process, method, system, product, or device that includes a series of steps or units is not necessarily limited to those expressly listed steps or units, but may include other steps or units not expressly listed or inherent to such a process, method, product, or device.

5. In this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where an association relationship exists between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) order of all information, to reduce enabling overheads to some extent. In addition, a common part of all information may be identified and enabled in a unified manner, to reduce enabling overheads caused by enabling the same information separately.

6. In this application, "preconfigure" may include "predefine", for example, define in a protocol. The "predefine" may be implemented by prestoring, in a device (for example, including network elements), corresponding code, a corresponding table, or other related information that may be used for indication. A specific implementation thereof is not limited in this application.

7. "Storage" or "store" in this application may mean "being stored" in one or more memories. The one or more memories may be separately disposed, or may be integrated into an encoder, a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited.

8. A "protocol" related in this application may be a standard protocol in the communication field, for example, may include a 4th generation (4th generation, 4G) network, a 5th generation (5th generation, 5G) network protocol, a new radio (new radio, NR) protocol, a 5.5G network protocol, a 6th generation (6th generation, 6G) network protocol, and a related protocol used in a future communication system. This is not limited in this application.

9. Arrows or blocks shown by dashed lines in diagrams of the accompanying drawings in this specification of this application indicate optional steps or optional modules.

10. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.

11. In this application, an indication includes a direct indication (also referred to as an explicit indication) and an implicit indication. Directly indicating information A means including the information A. Implicitly indicating the information A means indicating the information A by using a correspondence between the information A and information B and by directly indicating the information B. The correspondence between the information A and the information B may be predefined, prestored, pre-burned, or preconfigured.

12. In this application, that information C is used to determine information D includes that the information D is determined based only on the information C, and also includes that the information D is determined based on the information C and other information. In addition, that the information C is used to determine the information D may further include an indirect determining case, for example, a case in which the information D is determined based on information E, and the information E is determined based on the information C.

13. In this application, that "an apparatus A sends information A to an apparatus B" may be understood as that a destination end of the information A or an intermediate network element in a transmission path between the apparatus A and the destination end is the apparatus B, and may include directly or indirectly sending information to the apparatus B.

14. In this application, that "the apparatus B receives the information A from the apparatus A" may be understood as that a source end of the information A or an intermediate network element in a transmission path between the apparatus B and the source end is the apparatus A, and may include directly or indirectly receiving information from the apparatus A. Information may undergo necessary processing, for example, a format change, between a source end for sending the information and a destination end. However, the destination end may understand valid information from the source end. Similar descriptions in this application may be understood similarly. Details are not described herein.

First, a communication system to which an embodiment of this application is applicable is described.

The technical solutions provided in this application may be applied to various communication systems, for example, a 5G or an NR system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6G mobile communication system, or a system integrating a plurality of systems.

The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), and internet-of-things (internet-of-things, IoT) communication systems, or other communication systems.

One apparatus in a communication system may send a signal to another apparatus or receive a signal from another apparatus. The signal may include information, signaling, data, or the like. The apparatus may alternatively be replaced with an entity, a network entity, a device, a communication device, a communication module, a node, a communication node, or the like. In this application, the apparatus is used as an example for description. For example, the communication system may include at least one terminal device and at least one network device. The network device may send a downlink signal to the terminal device, and/or the terminal device may send an uplink signal to the network device.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example but not limitation, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or some functions without depending on a smartphone, for example, a smart watch or smart glasses, and includes devices that are dedicated to only one type of application function and need to collaboratively work with other devices such as smartphones, for example, various smart bands or smart jewelry for monitoring physical signs.

In embodiments of this application, an apparatus configured to implement a function of the terminal device may be a terminal device, or may be an apparatus that can support the terminal device in implementing the function, for example, a chip system, where the apparatus may be installed in the terminal device or used in matching with the terminal device. In embodiments of this application, the chip system may include a chip, or may include a chip and another discrete device. In embodiments of this application, only an example in which the apparatus configured to implement the function of the terminal device is a terminal device is used for description, and constitutes no limitation on the solutions in embodiments of this application.

A network device in embodiments of this application may be a device configured to communicate with the terminal device. The network device may also be referred to as an access network device or a radio access network device. For example, the network device may be a base station. In embodiments of this application, the network device may be a radio access network (radio access network, RAN) node (or device) that enables the terminal device to access a wireless network.

The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a positioning node, and a RAN intelligent controller (RAN intelligent controller, RIC).

The base station may alternatively be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies.

Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). Neither of a specific technology and a specific device form used by the network device is limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device may be a device including a CU or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device includes a gang-CU-CP, a gNB-CU-UP, and a gNB-DU.

In some deployments, a plurality of RAN nodes coordinate to assist the terminal in implementing radio access, and different RAN nodes respectively implement some functions of a base station. For example, the RAN node may be a CU, a DU, a CU-CP, a CU-UP, or an RU. The CU and the DU may be separately arranged, or may be included in a same network element, for example, a BBU. The RU may be included in a radio frequency device or a radio unit, for example, included in an RRU, an AAU, or an RRH.

The RAN node may support one or more types of fronthaul interfaces, and different fronthaul interfaces respectively correspond to DUs and RUs having different functions.

If a fronthaul interface between the DU and the RU is a common public radio interface (common public radio interface, CPRI), the DU is configured to implement one or more baseband functions, and the RU is configured to implement one or more radio frequency functions.

If the fronthaul interface between the DU and the RU is another type of interface, in comparison with the CPRI, some downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or two of digital beamforming (beamforming, BF) or fast Fourier transform (fast Fourier transform, FFT)/cyclic prefix (cyclic prefix, CP) removal are moved from the DU to the RU for implementation.

In a possible implementation, the interface may be an enhanced common public radio interface (enhanced common public radio interface, eCPRI). In an eCPRI architecture, different split modes between the DU and RU correspond to different categories (categories, Cat) of eCPRIs, for example, eCPRI Cat A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions (to be specific, one or more functions of decoding, rate dematching, descrambling, demodulation, inverse discrete Fourier transform (inverse discrete Fourier transform, IDFT), channel equalization, or RE demapping) before the demapping, and other functions (for example, one or more of digital BF or fast Fourier transform (fast Fourier transform, FFT)/CP removal) after the demapping are moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different communication systems, the CU (or the CU-CP and the CU-UP), the DU, or the RU may have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of a network device may be a network device, or may be an apparatus that can support the network device in implementing the function, for example, a chip system, a hardware circuit, a software module, or a combination of a hardware circuit and a software module. The apparatus may be installed in the network device or used in cooperation with the network device. In embodiments of this application, an example in which the apparatus configured to implement the function of the network device is the network device is merely used for description, and constitutes no limitation on the solutions in embodiments of this application.

The network device and/or the terminal device may be deployed on land, including an indoor device, an outdoor device, a handheld device, or a vehicle-mounted device; may be deployed on water; or may be deployed on an airplane, a balloon, and a satellite in the air. A scenario in which the network device and the terminal device are located is not limited in embodiments of this application.

In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network (for example, a mobile communication network), services supported by the network are increasingly diversified, and therefore requirements that need to be satisfied are increasingly diversified. For example, the network needs to be capable of supporting an ultra-high rate, an ultra-low latency, and/or massive connections. This feature makes network planning, network configuration, and/or resource scheduling increasingly complex. Because the network has increasingly powerful functions, for example, supports an increasingly high spectrum and supports new technologies such as a higher-order multiple-input multiple-output (multiple-input multiple-output, MIMO), beamforming, and/or beam management, network energy saving becomes a hot research topic. These new requirements, scenarios, and features cause unprecedented challenges to network planning, operation and maintenance, and efficient operation. To address the challenges, AI technologies can be introduced to wireless communications networks to implement network intelligence.

To support an AI technology in a wireless network, an AI node may be further introduced into the communication system.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over-the-top (over-the-top, OTT) system. The AI node may communicate with another device in the communication system. For example, the another device may be one or more of the following: a network device, a terminal device, a network element of a core network, or the like.

It may be understood that, a quantity of AI nodes is not limited in embodiments of this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application. The AI node may be an AI network element or an AI module.

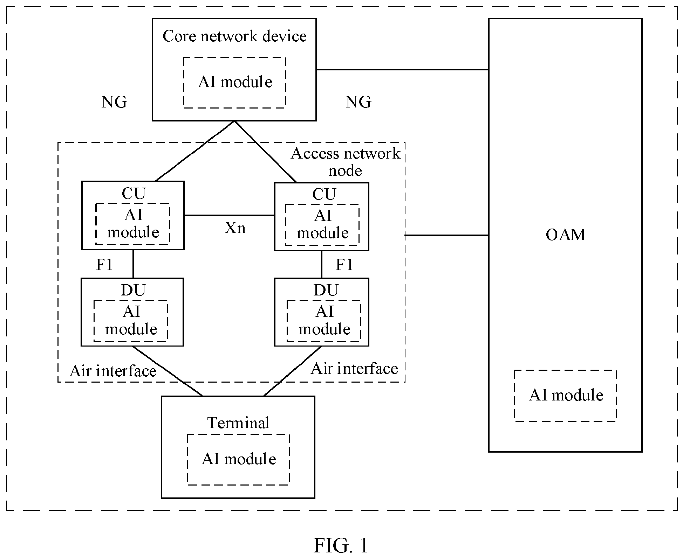

FIG. 1 is a diagram of an application framework to which an embodiment of this application is applicable. As shown in FIG. 1, apparatuses are connected to each other through an interface (for example, NG or Xn) or an air interface. One or more AI modules (where only one AI module is shown in FIG. 1 for clarity) are disposed in one or more of these apparatus nodes, for example, a core network device, an access network node (a RAN node), a terminal, or an operation, administration, and maintenance (operations, administration, and maintenance, OAM). The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different apparatuses may be the same or different. A model of the AI module is configured based on different parameters, and the AI module may implement different functions. The model of the AI module may be configured based on one or more of the following parameters: a structure parameter (for example, at least one of a quantity of layers of a neural network, a width of the neural network, a connection relationship between the layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

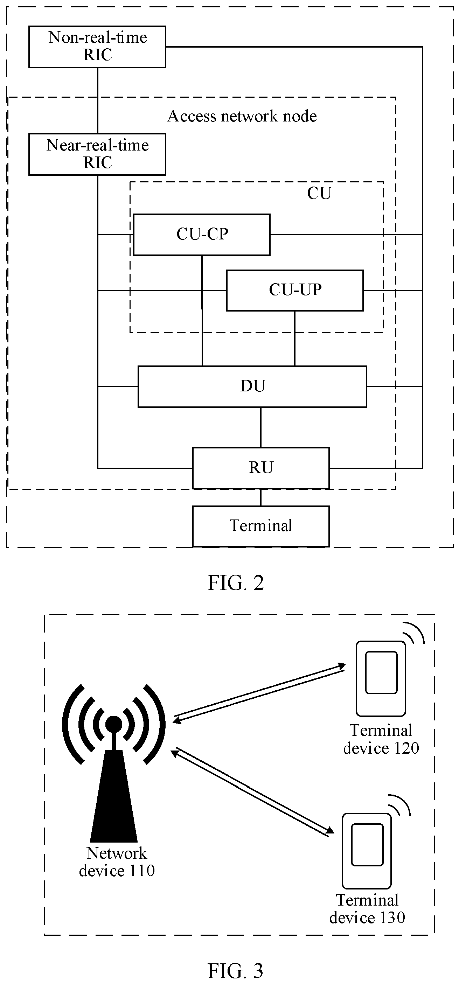

FIG. 2 is a diagram of another application framework to which an embodiment of this application is applicable. As shown in FIG. 2, a communication system includes a RAN intelligent controller (RAN intelligent controller, RIC). For example, the RIC may be AI modules 117 and 118 shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be on the order of seconds. The near-real-time RIC mainly processes near-real-time information, for example, latency-sensitive data. A latency of the data is on the order of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data.

Optionally, the near-real-time RIC may deliver an inference result to the RAN node and/or the terminal.

Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal.

Optionally, the inference result may be exchanged between the CU and the DU and/or between the DU and the RU. For example, the non-real-time RIC delivers the inference result to the DU, and the DU sends the inference result to the RU.

Alternatively, the near-real-time RIC and the non-real-time RIC may each be independently disposed as an apparatus. Optionally, the near-real-time RIC and the non-real-time RIC may alternatively be used as parts of other devices. For example, the near-real-time RIC is disposed in the RAN node (for example, in the CU or the DU), and the non-real-time RIC is disposed in an OAM, a cloud server, a core network device, or another network device.

FIG. 3 is a diagram of a communication system to which an embodiment of this application is applicable. As shown in FIG. 3, the communication system may include at least one network device, for example, a network device 110. The communication system 100 may further include at least one terminal device, for example, a terminal device 120 and a terminal device 130. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

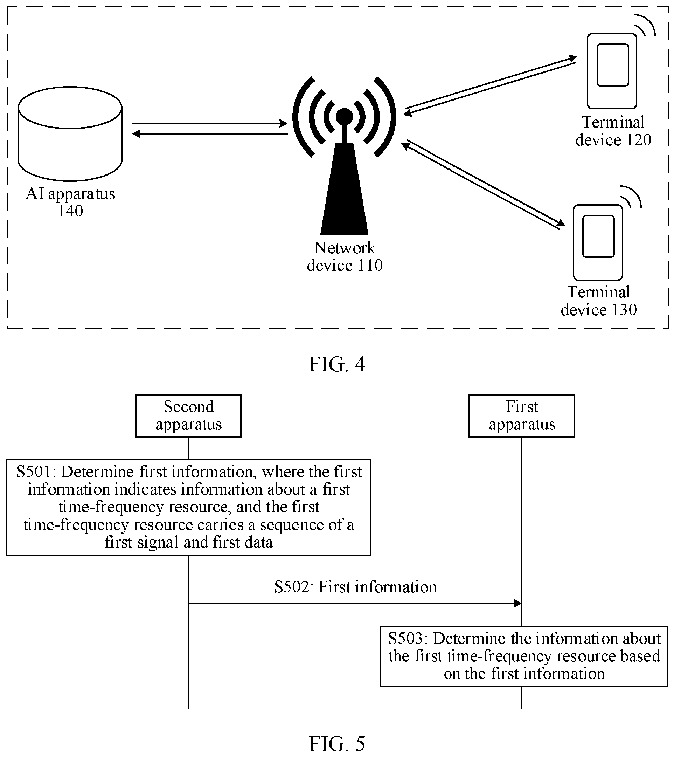

FIG. 4 is a diagram of another communication system to which an embodiment of this application is applicable. Compared with the communication system shown in FIG. 3, the communication system shown in FIG. 4 further includes an AI apparatus 140, and the AI apparatus 140 is configured to perform an AI-related operation, for example, construct a training dataset or train an AI model.

In a possible implementation, a network device 110 sends data related to training of the AI model to the AI apparatus 140, and the AI apparatus 140 constructs the training dataset and trains the AI model. For example, the data related to training of the AI model may include data reported by a terminal device. The AI apparatus 140 sends a result of an operation related to the AI model to the network device 110, and forward the result of the operation related to the AI model to the terminal device through the network device 110. For example, the result of the operation related to the AI model may include at least one of the following: a trained AI model, or an evaluation result or a test result for the model. For example, a part of the trained AI model is deployed on the network device 110, and the other part is deployed on the terminal device. Alternatively, the trained AI model is deployed on the network device 110. Alternatively, the trained AI model is deployed on the terminal device.

In FIG. 4, only an example in which the AI apparatus 140 is directly connected to the network device 110 is used for description. In another scenario, the AI apparatus 140 may alternatively be connected to the terminal device. The AI apparatus 140 may alternatively be connected to both the network device 110 and the terminal device. The AI apparatus 140 may alternatively be connected to the network device 110 through a third-party apparatus. Therefore, a connection relationship between the AI apparatus and another apparatus is not limited in this application.

The AI apparatus 140 may alternatively be disposed in a network device and/or a terminal device as a module, for example, disposed in the network device 110 or the terminal device shown in FIG. 3.

FIG. 3 and FIG. 4 are merely simplified diagrams of examples for ease of understanding. For example, the communication system may further include another device, for example, a wireless relay device and/or a wireless backhaul device, which are/is not shown in FIG. 3 and FIG. 4. In actual application, the communication system may include a plurality of network devices (for example, the network device 110 and a network device 150 (not shown in FIG. 3)), or may include a plurality of terminal devices. Therefore, quantities of network devices and terminal devices included in the communication system are not limited in this application.

Then, some of technical concepts in this application are briefly described.

Machine learning (machine learning, ML): ML is an important technical approach for implementing AI, and a deep neural network (deep neural network, DNN) is a specific implementation form of ML. According to a universal approximation theorem, a neural network can approximate any continuous function in theory, so that the neural network has a capability of learning any mapping. In a conventional communication system, a communication module needs to be designed with rich expert knowledge. However, a DNN-based deep learning communication system can automatically discover an implicit pattern structure from a large quantity of datasets, establish a mapping relationship between data, and obtain performance better than that of a conventional modeling method.

Based on a network construction manner, DNNs may be classified into a feedforward neural network (feedforward neural network, FNN), a convolutional neural network (convolutional neural network, CNN), and a recurrent neural network (recurrent neural network, RNN).

The CNN is a neural network dedicated to processing data of a grid-like structure. For example, both time series data (discrete sampling on a timeline) and image data (two-dimensional discrete sampling) may be considered as the data of the grid-like structure. The CNN performs a convolution operation by capturing partial information through a window with a fixed size, instead of performing an operation based on all input information at one time. This greatly reduces a calculation amount of a model parameter. In addition, based on different types of information captured in the window (where for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons.

AI model: The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another ML model.

AI model application or inference: A trained AI model is used to resolve a practical problem.

The AI model may be implemented by a hardware circuit, software, or a combination of software and hardware. This is not limited. A non-limitative example of the software includes program code, a program, a subprogram, instructions, an instruction set, code, a code segment, a software module, an application, a software application, or the like.

DMRS: The DMRS can be used to estimate an equivalent channel matrix experienced by a data channel (for example, a physical downlink shared channel (physical downlink shared channel, PDSCH) or a PUSCH) or a control channel (for example, a physical downlink control channel (physical downlink control channel, PDCCH)), to detect and demodulate a data signal, for example, a signal on the data channel or the control channel.

The PDSCH is used as an example. A DMRS vector sent by a transmitting end is s and a data signal vector is x. A same precoding operation (multiplying by a same precoding matrix P) is performed on the DMRS and the data signal. The DMRS vector and the data signal vector received by a receiving end are respectively expressed as follows: $Data signal vector : y = HPx + n = {H}^{˜} x + n$ (1) $DMRS vector : r = HPs + n = {H}^{˜} s + n$ (2)

It can be learned from Formulas (1) and (2) that equivalent channels through which the data signal and the DMRS pass are both ***H̃***. The receiving end obtains estimation of the equivalent channel ***H̃*** according to a channel estimation algorithm (for example, minimum mean square error (minimum mean square error, MMSE) channel estimation) and based on the known DMRS vector s, to complete demodulation of the data signal.

Usually, one DMRS port corresponds to one transport layer (also referred to as a stream, a quantity of spatial layers, or a rank (rank)). For MIMO transmission with a quantity R of transport layers, a quantity of DMRS ports is R. To ensure quality of channel estimation, different DMRS ports are orthogonal to each other. To reduce mutual interference, resources respectively corresponding to different DMRS ports may be mapped to a preset time-frequency resource in a frequency division multiplexing, time division multiplexing, or code division multiplexing manner. For details, refer to the following descriptions.

DMRS configuration type: DMRS configuration types mainly include Type 1 (Type 1) and Type 2 (Type 2). Type 1 supports a maximum of eight orthogonal DMRS ports, and Type 2 supports a maximum of 12 orthogonal DMRS ports. For details, refer to Table 1 and Table 2.

**Table 1: Type 1 DMRS parameter values**

| ***p*** | λ | **Δ** | *w*_{f} (*k*') | | *w*ₜ (*l*') | |
|---|---|---|---|---|---|---|
| | | | *k'= 0* | *k'=1* | *l'* = 0 | *l' =* 1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |

| *k'* = 0 | *k' =* 1 | *l' =* 0 | *l' =* 1 | | | |
|---|---|---|---|---|---|---|
| 1007 | 1 | 1 | +1 | -1 | +1 | -1 |

**Table 2: Type 2 DMRS parameter values**

| ***p*** | λ | **Δ** | *w*_{f} (*k*') | | *w*ₜ (*l*') | |
|---|---|---|---|---|---|---|
| | | | *k'* = 0 | *k' =* 1 | *l' =* 0 | *l' =* 1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

As shown in Table 1 and Table 2, p is an index of a DMRS port, and λ is an index of a code division multiplexing (code division multiplexing, CDM) group to which the DMRS port belongs. DMRS ports in a same CDM group occupy a same time-frequency resource, but orthogonal cover code (Orthogonal Cover Code, OCC) sequences are different. For a single symbol, Type 1 supports a maximum of four DMRS ports, and one DMRS resource occupies one orthogonal frequency division multiplexing (orthogonal frequency division multiplexing, OFDM) symbol. The four DMRS ports are grouped into a CDM group #0 and a CDM group #1. The CDM group #0 includes a port #0 and a port #1, and the CDM group #1 includes a port #2 and a port #3. DMRS ports in a same CDM group are mapped to a same time-frequency resource, but may be distinguished based on OCC sequences, to ensure orthogonality between the DMRS ports in the CDM group.

For example, the port #0 and the port #1 are in a same resource element (resource element, RE), and resource mapping is performed in a comb manner in frequency domain. In other words, adjacent frequency-domain resources occupied by the port #0 and the port #1 are separated by one subcarrier. For one DMRS port, two adjacent occupied REs correspond to one OCC sequence with a length of 2. For example, for a subcarrier 0 and a subcarrier 2, the port#0 and the port#1 use a group of OCC sequences (+1+1/+1-1) with a length of 2. Similarly, the port#2 and the port#3 are in a same RE, and are mapped, in a comb manner in frequency domain, to an RE that is not occupied by the port#0 and the port#1. For a subcarrier 1 and a subcarrier 3, the port#2 and the port#3 use a group of OCC codeword sequences (+1+1 and +1-1) with a length of 2.

Currently, a pattern of a time-frequency resource used to carry a DMRS sequence cannot meet a requirement for performing channel estimation on a time-frequency resource occupied for data transmission in a flexible, changing, and complex channel environment. For example, when the pattern of the time-frequency resource used to carry the DMRS sequence is configured in a protocol-predefined manner, a quantity and types of patterns are both limited, and cannot adapt to a flexible, changing, and complex wireless environment. For another example, when the pattern of the time-frequency resource used to carry the DMRS sequence is generated according to an ML algorithm, data in a specific communication environment needs to be obtained for AI training. Consequently, an environment adaptability of the pattern of the time-frequency resource used to carry the DMRS sequence is limited, and training overheads are also high.

In view of this, this application provides a communication method and a communication apparatus, to support appropriate channel estimation on a time-frequency resource occupied for data transmission in a flexible, changing, and complex wireless environment.

For ease of understanding and description, the following describes the communication method in embodiments of this application by using a first apparatus and a second apparatus as an example. However, this should not constitute any limitation on an execution body of the communication method in embodiments of this application. For example, a method performed by the first apparatus may alternatively be performed by a module (for example, a circuit, a chip, or a chip system) of the first apparatus, or may be implemented by a logical node, a logical module, or software that can implement all or some functions of the first apparatus. A method performed by the second apparatus may be performed by a module (for example, a circuit, a chip, or a chip system) of the second apparatus, or may be implemented by a logical node, a logical module, or software that can implement all or some functions of the second apparatus.

The apparatus may be a communication device or a device, or a component or a chip system of a device. For example, the first apparatus is a first device, a first component, or a first chip. For example, the second apparatus is a second device, a second component, or a second chip.

The first apparatus may be a terminal device or a network device, and the second apparatus may be a network device or a terminal device. For example, the first apparatus is a terminal device, and the second apparatus is a terminal device. For another example, the first apparatus is a network device, and the second apparatus is a terminal device; or the second apparatus is a network device, and the first apparatus is a terminal device.

The following describes the communication method in embodiments of this application with reference to the accompanying drawings.

FIG. 5 is a schematic interaction flowchart of a communication method according to an embodiment of this application. The method shown in FIG. 5 may be performed by a first apparatus and a second apparatus, or may be performed by a module and/or a component (for example, a chip or an integrated circuit) that are/is installed in the first apparatus and the second apparatus and that have/has a corresponding function. This is not limited herein. The following uses the first apparatus and the second apparatus as an example for description. As shown in FIG. 5, the method includes the following steps.

S501: The second apparatus determines first information.

For example, the first information indicates information about a first time-frequency resource, and the first time-frequency resource is used to carry a sequence of a first signal and first data; or the first time-frequency resource is used to carry a sequence of a first signal, and the first time-frequency resource is further used to carry first data. The first signal is used to demodulate the first data. For example, the first apparatus may perform data demodulation on the first data by using the first signal.

The first signal may also be understood as a reference signal, and can be used for channel estimation, channel information obtaining, or the like.

The second apparatus may determine the first information based on prior information.

The prior information may include information about a historical change of a channel environment. For example, the second apparatus may determine channel environment information at second time based on channel environment information at first time. The first time is time before the second apparatus sends the first information to the first apparatus. The first apparatus communicates with the second apparatus at the first time. The second time may be sending time of the first information.

The first time, the second time, and the sending time may each be a corresponding time unit, for example, a slot, a symbol, or a mini symbol.

For example, a channel environment at the first time is stable, and a channel environment at the second time determined by the second apparatus is also stable. The second apparatus may determine the corresponding first time-frequency resource.

For example, the channel environment at the first time changes dramatically, and the channel environment at the second time determined by the second apparatus also changes dramatically. The second apparatus may determine a corresponding first time-frequency resource.

Alternatively, the second apparatus may determine the first information based on measurement information of the reference signal.

For example, the second apparatus first sends the reference signal (for example, a channel state information reference signal (channel state information reference signal, CSI-RS)) to the first apparatus. The first apparatus measures the reference signal, obtains the measurement information of the reference signal, and sends the measurement information of the reference signal to the second apparatus. Then, the second apparatus determines the first information based on the measurement information of the reference signal.

For example, if the measurement information of the reference signal indicates that the channel environment between the second apparatus and the first apparatus changes dramatically, the second apparatus may determine the corresponding first time-frequency resource, so that the first apparatus can appropriately perform channel estimation.

For example, if the measurement information of the reference signal indicates that the channel environment between the second apparatus and the first apparatus changes stably, the second apparatus may also determine a corresponding first time-frequency resource, so that the first apparatus can appropriately perform channel estimation.

The measurement information may include but is not limited to a measurement report, an eigenvector V (a vector related to precoding to be used for downlink transmission after singular value decomposition (singular value decomposition, SVD) is performed on a channel), or even information about a channel.

When the first apparatus reports one or more parameters related to the measurement information to the second apparatus, the second apparatus may more accurately determine an appropriate first time-frequency resource based on the measurement information of the reference signal, so that the first apparatus can appropriately perform channel estimation.

In conclusion, after the first apparatus receives the reference signal, the first apparatus may send the measurement information of the reference signal to the second apparatus, the second apparatus may determine a corresponding first time-frequency resource based on a channel condition between the first apparatus and the second apparatus that is indicated by the measurement information of the reference signal, and the first apparatus may perform channel estimation by using a corresponding first signal.

In conclusion, a specific manner in which the second apparatus determines the first information is not limited in embodiments of this application.

In a possible implementation, the first data may include one or more of broadcast information, control data, and user data.

When the first data includes the control data, the first signal is used to demodulate the control data.

When the first data includes the user data, the first signal is used to demodulate the user data.

When the first data includes the broadcast information, the first signal is used to demodulate the broadcast information.

When the first data includes the control data and the user data, the first signal is used to demodulate the control data and the user data. The same rule applies to other scenarios.

In embodiments of this application, that the first time-frequency resource is used to carry the sequence of the first signal and the first data may be understood as that the sequence of the first signal is carried on all resources in the first time-frequency resource, and the first data is carried on all resources in the first time-frequency resource. In other words, the sequence of the first signal and the first data are both mapped to the first time-frequency resource.

In embodiments of this application, when the sequence of the first signal and the first data are both mapped to a same RE during resource mapping, power allocated to the first data and the sequence of the first signal may be scheduled. For example, when the sequence of the first signal and the first data are mapped to the same RE, the power allocated to the sequence of the first signal is 0.5, and the power allocated to the first data is 0.5. In this case, a finally formed symbol is as follows: $x = \sqrt{0.5} ∗ Pilot + \sqrt{1 - 0.5} ∗ data symbol$ (3)

A pilot (pilot) is a symbol of a sequence of a first signal on a specific RE, and a data symbol (data symbol) is a symbol of first data on the same RE. The sequence of the first signal and the first data may be generated based on a constellation mapping manner. The constellation mapping manner of the sequence of the first signal and the first data is not limited in embodiments of this application.

0.5 in Formula (3) is merely used as an example. For ease of description, 0.5 may be represented as u, and a value of u is any positive number from 0 to 1.

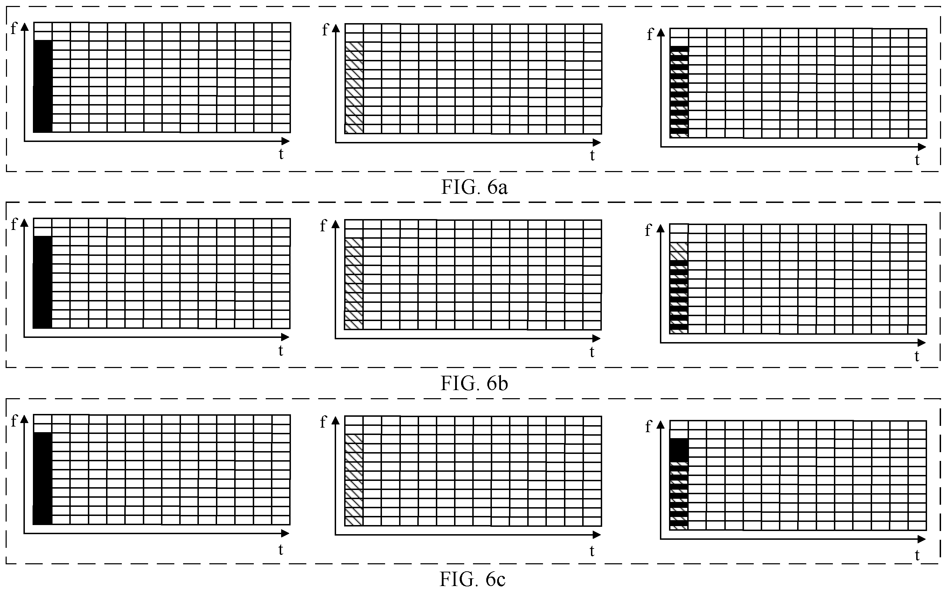

In conclusion, during resource mapping, the first data and the sequence of the first signal are both mapped to the same RE, and during power scheduling, the power of the first data and the power of the sequence of the first signal can be flexibly changed. Refer to FIG. 6a, FIG. 6b, and FIG. 6c.

FIG. 6a, FIG. 6b, and FIG. 6c are diagrams of a relationship among a first signal, first data, and a first time-frequency resource. For example, the first time-frequency resource is located in one resource block (resource block, RB), the first time-frequency resource includes 10 REs (corresponding to a 1^{st} time-domain symbol), and sequentially includes a 1^{st} RE, a 2^{nd} RE, ..., and a 10^{th} RE from top to bottom. A white box indicates an RE that is not included in the first time-frequency resource.

➢ As shown in FIG. 6a, the first data (represented by a black block) is mapped to all the resources in the first time-frequency resource (refer to a first diagram (from bottom to top)), and a sequence of the first signal (represented by a slash texture) is also mapped to all the resources in the first time-frequency resource (refer to a second diagram (from bottom to top)). When power allocation is performed after resource mapping is completed, power allocated to the first data on each RE in the first time-frequency resource and power allocated to the sequence of the first signal on each RE in the first time-frequency resource are both 0.5 (refer to a third diagram (from bottom to top)). Correspondingly, information carried on each of the 1^{st} RE to the 10^{th} RE that are received by a receiving end is the first data and the sequence of the first signal.

➢ As shown in FIG. 6b, the first data (represented by a black block) is mapped to all the resources in the first time-frequency resource (refer to a first diagram (from bottom to top)), and the sequence of the first signal (represented by a slash texture) is also mapped to all the resources in the first time-frequency resource (refer to a second diagram (from bottom to top)). When power allocation is performed after resource mapping is completed, power allocated to the first data on each of the 1^{st} RE and the 2^{nd} RE in the first time-frequency resource is 0 (or close to 0), and power allocated to the sequence of the first signal on each of the 1^{st} RE and the 2^{nd} RE in the first time-frequency resource is 1 (or close to 1). In addition, power allocated to the first data on each of the 3^{rd} RE to the 10^{th} RE in the first time-frequency resource is 0.5, and power allocated to the sequence of the first signal on each of the 3^{rd} RE to the 10^{th} RE in the first time-frequency resource is 0.5. Correspondingly, information carried on the 1^{st} RE and the 2^{nd} RE that are received by the receiving end is the sequence of the first signal, and information carried on each of the 3^{rd} RE to the 10^{th} RE that are received by the receiving end is the sequence of the first data and the first signal.

➢ As shown in FIG. 6c, the first data (represented by a black block) is mapped to all the resources in the first time-frequency resource (refer to a first diagram (from bottom to top)), and the sequence of the first signal (represented by a slash texture) is also mapped to all the resources in the first time-frequency resource (refer to a second diagram (from bottom to top)). When power allocation is performed after resource mapping is completed, power allocated to the sequence of the first signal on each of the 1^{st} RE and the 2^{nd} RE in the first time-frequency resource is 0 (or close to 0), power allocated to the first data on each of the 1^{st} RE and the 2^{nd} RE in the first time-frequency resource is 1 (or close to 1). In addition, power allocated to the first data on each of the 3^{rd} RE to the 10^{th} RE in the first time-frequency resource is 0.5, and power allocated to the sequence of the first signal on each of the 3^{rd} RE to the 10^{th} RE in the first time-frequency resource is 0.5. Correspondingly, information carried on the 1^{st} RE and the 2^{nd} RE that are received by the receiving end is the first data, and information carried on each of the 3^{rd} RE to the 10^{th} RE that are received by the receiving end is the sequence of the first data and the first signal.

It may be understood that one or both of the RE on which power of the sequence of the first signal is 0 and the RE on which power of the first data is 0 may be predefined in a protocol, or may be sent by the first apparatus to the second apparatus or received from the second apparatus. This is not limited herein.

In embodiments of this application, the first signal is merely used as an example of a term, and may be represented as a DMRS, or may be represented as a term whose function is similar to or the same as that of a DMRS in a future standard. This is not limited.

In embodiments of this application, the information about the first time-frequency resource may include configuration information of the first time-frequency resource, or may include configuration information of a pattern of the first time-frequency resource, or the like. In other words, the first apparatus may determine configuration or arrangement information of the first time-frequency resource based on the information about the first time-frequency resource, so that a time-frequency resource corresponding to the sequence of the first signal can be determined.

In embodiments of this application, when the first information indicates the information about the first time-frequency resource, the first information may include the information about the first time-frequency resource. The information about the first time-frequency resource may include related information of the pattern of the first time-frequency resource, or may include related information that can be used to determine the first time-frequency resource. For details, refer to the following descriptions.

In a possible implementation, the first information includes at least one of the following:
identification information (which may include information such as an identifier or an index) of the pattern of the first time-frequency resource;
length information of the sequence of the first signal;
information obtained by compressing the pattern of the first time-frequency resource;
a mapping relationship between the first time-frequency resource and the sequence of the first signal;
a start location corresponding to the first time-frequency resource;
an end location corresponding to the first time-frequency resource;
a quantity of resources of the first time-frequency resource in frequency domain; or
a quantity of resources of the first time-frequency resource in time domain.

For example, the first information includes the identification information of the pattern of the first time-frequency resource.

For example, patterns of a plurality of time-frequency resources are preconfigured between the second apparatus and the first apparatus. A pattern of each time-frequency resource indicates arrangement information of a time-frequency resource used to carry a sequence of a signal used for data demodulation, and corresponding identification information is configured for the pattern of each time-frequency resource.

After determining the pattern of the first time-frequency resource, the second apparatus may indicate the identification information of the pattern of the first time-frequency resource to the first apparatus. The first apparatus determines the corresponding pattern of the first time-frequency resource based on the identification information of the pattern of the first time-frequency resource, obtains the sequence of the first signal based on the pattern of the first time-frequency resource, and performs channel estimation by using the first signal.

For example, the first information includes the length information of the sequence of the first signal.

For example, for an association relationship between the length of the sequence of the first signal and the pattern of the time-frequency resource that is preconfigured between the first apparatus and the second apparatus, refer to Table 3. Content shown in Table 3 is merely used as an example, and is not used as a final limitation.

**Table 3**

| Length of the sequence of the first signal | Pattern of the first time-frequency resource |
|---|---|
| Length 1 | Pattern 1 |
| Length 2 | Pattern 2 |

As shown in Table 3:
- the length of the sequence of the first signal is the length 1, and is associated with the pattern 1; or
- the length of the sequence of the first signal is the length 2, and is associated with the pattern 2.

In conclusion, the second apparatus indicates length information of the sequence of the first signal to the first apparatus, and the first apparatus determines the corresponding pattern of the first time-frequency resource based on the indication of the second apparatus and the association relationship shown in Table 3.

For example, the first information includes the information obtained by compressing the pattern of the first time-frequency resource.

For example, after determining the pattern of the first time-frequency resource, the second apparatus may compress the pattern of the first time-frequency resource, and send the information obtained by compressing the pattern of the first time-frequency resource to the first apparatus. The first apparatus may decompress the information, to obtain the pattern of the first time-frequency resource.

In an example, the pattern of the first time-frequency resource may be the following pattern:

| | | | | | | | | | | | | | | |
|---|---|---|---|---|---|---|---|---|---|---|---|---|---|---|
| 1 | 1 | 1 | 1 | 1 | 1 | 1 | 3 | 3 | 3 | 3 | 3 | 3 | 3 | 3 |
| 1 | 1 | 1 | 1 | 1 | 1 | 1 | 3 | 3 | 3 | 3 | 3 | 3 | 3 | 3 |
| 1 | 1 | 1 | 1 | 1 | 1 | 1 | 3 | 3 | 3 | 3 | 3 | 3 | 3 | 3 |
| 1 | 1 | 1 | 1 | 1 | 1 | 1 | 3 | 3 | 3 | 3 | 3 | 3 | 3 | 3 |
| 1 | 1 | 1 | 1 | 1 | 1 | 1 | 3 | 3 | 3 | 3 | 3 | 3 | 3 | 3 |
| 1 | 1 | 1 | 1 | 1 | 1 | 1 | 3 | 3 | 3 | 3 | 3 | 3 | 3 | 3 |
| 2 | 2 | 2 | 2 | 2 | 2 | 2 | 4 | 4 | 4 | 4 | 4 | 4 | 4 | 4 |
| 2 | 2 | 2 | 2 | 2 | 2 | 2 | 4 | 4 | 4 | 4 | 4 | 4 | 4 | 4 |
| 2 | 2 | 2 | 2 | 2 | 2 | 2 | 4 | 4 | 4 | 4 | 4 | 4 | 4 | 4 |
| 2 | 2 | 2 | 2 | 2 | 2 | 2 | 4 | 4 | 4 | 4 | 4 | 4 | 4 | 4 |
| 2 | 2 | 2 | 2 | 2 | 2 | 2 | 4 | 4 | 4 | 4 | 4 | 4 | 4 | 4 |
| 2 | 2 | 2 | 2 | 2 | 2 | 2 | 4 | 4 | 4 | 4 | 4 | 4 | 4 | 4 |

1, 2, 3, and 4 may represent the following:
- A same sequence with a length of 42 is placed at 42 RE locations corresponding to each of numbers 1, 2, 3, and 4 (arranged in frequency domain first and then time domain), that is, a copy of the sequence with the length of 42 is placed at every 42 RE locations.
- Four different sequences with a length of 42 are respectively placed at 42 RE locations corresponding to a number 1, 42 RE locations corresponding to a number 2, 42 RE locations corresponding to a number 3, and 42 RE locations corresponding to a number 4 (arranged in frequency domain first and then time domain).

Locations at which 1, 2, 3, and 4 appear may be obtained through neural network optimization.

Because each symbol S corresponding to a sequence is based on an existing standard, where $S ∈ \left(\pm \frac{\sqrt{2}}{2}\pm \frac{\sqrt{2}}{2}\right)$, a sequence 1 corresponds to 42 symbols, and each symbol may be $\pm \frac{\sqrt{2}}{2} \pm$ . In this way, symbols of the sequence of the first signal corresponding to 168 RE locations are connected in frequency domain first and then time domain to form a sequence with a length of 168 symbols. The sequence of the first signal is sent to a neural network used for compression, and a quantity of bits occupied by information obtained through compression is less than a quantity of bits occupied by the sequence directly indicating the 168 symbols.

When receiving the compressed information, the first apparatus may send the compressed information to a corresponding neural network used for recovery (where the neural network used for recovery and the neural network used for compression appear in pairs, and are obtained through paired training), so that an original pattern of the first time-frequency resource can be recovered, to complete subsequent channel estimation and decoding.

When the second apparatus delivers, to the first apparatus, the information obtained by compressing the pattern of the first time-frequency resource, the second apparatus may further send related auxiliary information to the first apparatus, for example, a mapping relationship between a recovered sequence (a sequence with a length of 168 symbols) and the pattern of the first time-frequency resource. The first apparatus may obtain the pattern of the first time-frequency resource based on the auxiliary information.

In embodiments of this application, the first apparatus and the second apparatus may exchange information about an AI model. For example, content reported by the first apparatus to the second apparatus includes at least a size of memory space available for storing an AI/ML model, computational power information (for example, a computational capability for running the AI/ML model), whether running of the AI/ML model is supported, and a supported AI/ML model type (for example, CNN, RNN, fully connected, or a random forest model). When the first apparatus indicates, to the second apparatus, that the first apparatus supports running of the AI model, the second apparatus may deliver a neural network model used for recovery to the first apparatus, and the first apparatus obtains the pattern of the first time-frequency resource based on the neural network model used for recovery and the information (which may further include the auxiliary information) obtained by compressing the pattern of the first time-frequency resource.

For example, the first information includes the mapping relationship between the first time-frequency resource and the sequence of the first signal.

For example, an association relationship between a plurality of mapping relationships and the pattern of the time-frequency resource is preconfigured between the second apparatus and the first apparatus.

After determining the pattern of the first time-frequency resource, the second apparatus indicates the mapping relationship between the first time-frequency resource and the sequence of the first signal to the first apparatus. The first apparatus determines the corresponding pattern of the first time-frequency resource based on the mapping relationship between the first time-frequency resource and the sequence of the first signal and an association relationship between the mapping relationship and the time-frequency resource, obtains the sequence of the first signal based on the pattern of the first time-frequency resource, and performs channel estimation by using the first signal. Refer to Table 4. Content shown in Table 4 is merely used as an example, and is not used as a final limitation.

**Table 4**

| Mapping relationship between a sequence of a first signal and a first time-frequency resource | Pattern of the first time-frequency resource |
|---|---|
| Mapping relationship 1 | Pattern 1 |
| Mapping relationship 2 | Pattern 2 |

As shown in Table 4:
- the mapping relationship between the sequence of the first signal and the pattern of the first time-frequency resource is the mapping relationship 1, and is associated with the pattern 1; or
- the mapping relationship between the sequence of the first signal and the pattern of the first time-frequency resource is the mapping relationship 2, and is associated with the pattern 2.

In conclusion, the second apparatus indicates the mapping relationship between the sequence of the first signal and the pattern of the first time-frequency resource to the first apparatus, and the first apparatus determines the corresponding pattern of the first time-frequency resource based on the indication of the second apparatus and the association relationship shown in Table 4.

In addition, the mapping relationship between the sequence of the first signal and the first time-frequency resource may be understood as a mapping order of the first time-frequency resource in time domain and frequency domain.

In a possible implementation, the mapping relationship between the sequence of the first signal and the first time-frequency resource may include:
mapping in frequency domain first and then in time domain, or mapping in time domain first and then in frequency domain.

For example, when the mapping relationship between the sequence of the first signal and the first time-frequency resource is: mapping in frequency domain first and then in time domain, the first time-frequency resource may be first mapped to the frequency domain, and then mapped to the time domain.

For another example, when the mapping relationship between the sequence of the first signal and the first time-frequency resource is: mapping in time domain first and then in frequency domain, the first time-frequency resource may be first mapped to the time domain, and then mapped to the frequency domain.

In conclusion, the first apparatus may determine a specific arrangement manner of the first time-frequency resource in time domain and frequency domain based on the mapping relationship between the sequence of the first signal and the first time-frequency resource.

For example, the first information includes the start location corresponding to the first time-frequency resource.

For example, for an association relationship between the start location corresponding to the first time-frequency resource and the pattern of the time-frequency resource that is preconfigured between the first apparatus and the second apparatus, refer to Table 5. Content shown in Table 5 is merely used as an example, and is not used as a final limitation.

**Table 5**

| Start location corresponding to a first time-frequency resource | Pattern of the first time-frequency resource |
|---|---|
| Start location 1 | Pattern 1 |
| Start location 2 | Pattern 2 |

As shown in Table 5:
- the start location corresponding to the first time-frequency resource is the start location 1, and is associated with the pattern 1; or
- the start location corresponding to the first time-frequency resource is the start location 2, and is associated with the pattern 2.

In conclusion, the second apparatus indicates the start location corresponding to the first time-frequency resource to the first apparatus, and the first apparatus determines the corresponding pattern of the first time-frequency resource based on the indication of the second apparatus and the association relationship shown in Table 5.

For example, the first information includes the end location corresponding to the first time-frequency resource.

For example, for an association relationship between the end location corresponding to the first time-frequency resource and the pattern of the time-frequency resource that is preconfigured between the first apparatus and the second apparatus, refer to Table 6. Content shown in Table 6 is merely used as an example, and is not used as a final limitation.

**Table 6**

| End location corresponding to a first time-frequency resource | Pattern of the first time-frequency resource |
|---|---|
| End location 1 | Pattern 1 |
| End location 2 | Pattern 2 |

As shown in Table 6:
- the end location corresponding to the first time-frequency resource is the start location 1, and is associated with the pattern 1; or
- the end location corresponding to the first time-frequency resource is the start location 2, and is associated with the pattern 2.

In conclusion, the second apparatus indicates the end location corresponding to the first time-frequency resource to the first apparatus, and the first apparatus determines the corresponding pattern of the first time-frequency resource based on the indication of the second apparatus and the association relationship shown in Table 6.

For example, the first information includes the quantity of resources of the first time-frequency resource in frequency domain.

For example, for an association relationship between the quantity of resources of the first time-frequency resource in frequency domain and the pattern of the time-frequency resource that is preconfigured between the first apparatus and the second apparatus, refer to Table 7. Content shown in Table 7 is merely used as an example, and is not used as a final limitation.

**Table 7**

| Quantity of resources of a first time-frequency resource in frequency domain | Pattern of the first time-frequency resource |
|---|---|
| Quantity 1 | Pattern 1 |
| Quantity 2 | Pattern 2 |

As shown in Table 7:
- the quantity of resources (a quantity of subcarriers that need to be occupied) of the first time-frequency resource in frequency domain is the quantity 1, and is associated with the pattern 1; or
- the quantity of resources of the first time-frequency resource in frequency domain is the quantity 2, and is associated with the pattern 2.

In conclusion, the second apparatus indicates the quantity of resources of the first time-frequency resource in frequency domain to the first apparatus, and the first apparatus determines the corresponding pattern of the first time-frequency resource based on the indication of the second apparatus and the association relationship shown in Table 7.

For example, the first information includes the quantity of resources of the first time-frequency resource in time domain.

For example, for an association relationship between the quantity of resources of the first time-frequency resource in time domain and the pattern of the time-frequency resource that is preconfigured between the first apparatus and the second apparatus, refer to Table 8. Content shown in Table 8 is merely used as an example, and is not used as a final limitation.

**Table 8**

| Quantity of resources of a first time-frequency resource in time domain | Pattern of the first time-frequency resource |
|---|---|
| Quantity 1 | Pattern 1 |
| Quantity 2 | Pattern 2 |

As shown in Table 8:
- the quantity of resources (a quantity of time-domain symbols that need to be occupied) of the first time-frequency resource in time domain is the quantity 1, and the first time-frequency resource is associated with the pattern 1; or
- the quantity of resources of the first time-frequency resource in time domain is the quantity 2, and the first time-frequency resource is associated with the pattern 2.

In conclusion, the second apparatus indicates the quantity of resources of the first time-frequency resource in time domain to the first apparatus, and the first apparatus determines the corresponding pattern of the first time-frequency resource based on the indication of the second apparatus and the association relationship shown in Table 8.

In the foregoing descriptions, an example in which the first information includes one piece of information is used, but a scenario in which the first information includes a plurality of pieces of information is not limited. Refer to Table 9. Content shown in Table 9 is merely used as an example, and is not used as a final limitation.

**Table 9**

| First information | Pattern of a first time-frequency resource |
|---|---|
| Quantity of resources of the first time-frequency resource in time domain is a quantity 1, and a length of a sequence of a first signal is a length 1. | Pattern 1 |
| Quantity of resources of the first time-frequency resource in time domain is a quantity 2, and a length of a sequence of a first signal is a length 2. | Pattern 2 |

As shown in Table 9:
- the quantity of resources of the first time-frequency resource in time domain is the quantity 1, the length of the sequence of the first signal is the length 1, and the first time-frequency resource is associated with the pattern 1; or
- the quantity of resources of the first time-frequency resource in time domain is the quantity 2, the length of the sequence of the first signal is the length 2, and the first time-frequency resource is associated with the pattern 2.

In conclusion, the second apparatus indicates the quantity of resources of the first time-frequency resource in time domain and the length of the sequence of the first signal to the first apparatus, and the first apparatus determines the corresponding pattern of the first time-frequency resource based on the indication of the second apparatus and the association relationship shown in Table 9.

In addition, the first information may include one or more of the following information: the mapping relationship between the sequence of the first signal and the first time-frequency resource, the length information of the sequence of the first signal, the quantity of resources of the first time-frequency resource in frequency domain, the quantity of resources of the first time-frequency resource in time domain, the start location corresponding to the first time-frequency resource, or the like. In other words, the first information indicates the first time-frequency resource by using one or more of the foregoing information.

It may be understood that an item in the foregoing information that is not included in the first information may be predefined or preconfigured. This is not limited herein. The first apparatus may determine the pattern of the first time-frequency resource based on the foregoing information.

It may be understood that, in this application, "determining the pattern of the first time-frequency resource" or "indicating the pattern of the first time-frequency resource" is equivalent to "determining the first time-frequency resource" or "indicating the first time-frequency resource", and the two may be replaced with each other.

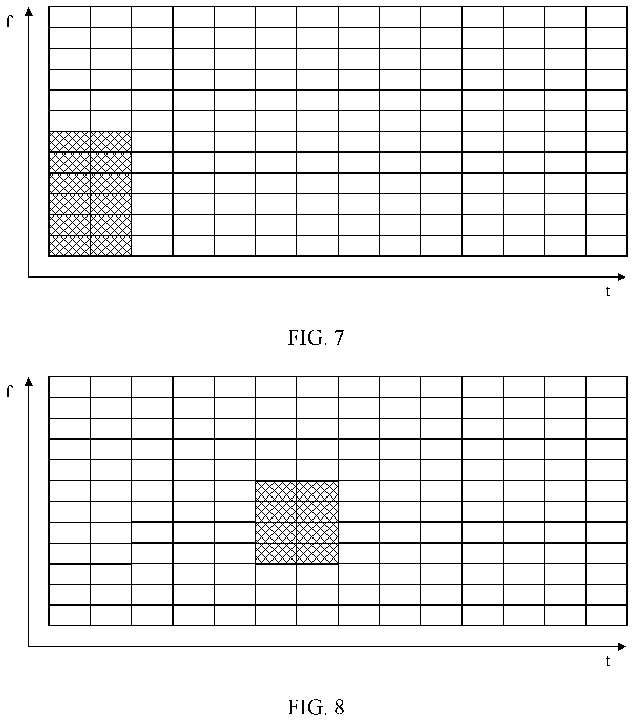

For example, the mapping relationship between the sequence of the first signal and the first time-frequency resource is: mapping in frequency domain first and then in time domain. The quantity of resources of the first time-frequency resource in frequency domain is 6, the quantity of resources of the first time-frequency resource in time domain is 2, and the start location corresponding to the first time-frequency resource is a 1^{st} subcarrier corresponding to a 1^{st} time-domain symbol. For details, refer to descriptions in FIG. 7.

FIG. 7 is a diagram of a pattern of a first time-frequency resource according to an embodiment of this application. As shown in FIG. 7, one RB includes 168 REs, the first time-frequency resource includes 12 REs (represented by using a cross texture), and the 12 REs are six REs corresponding to a 1^{st} time-domain symbol and six REs corresponding to a 2^{nd} time-domain symbol.

Based on the content described in FIG. 7, a form of the first information is: (the start location corresponding to the first time-frequency resource, F_{spread}, T_{spread}, order)=(000000, 6, 2, 0). The start location corresponding to the first time-frequency resource may be indicated by using 8 bits (this is merely an example). For example, the start location corresponding to the first time-frequency resource is indicated by using 000000, where three high-order bits in 000000 indicate a 1^{st} subcarrier, three low-order bits in 000000 indicate a 1^{st} time-domain symbol, F_{spread} is the quantity of resources of the first time-frequency resource in frequency domain (for example, F_{spread}=6), T_{spread} is the quantity of resources of the first time-frequency resource in time domain (for example, T_{spread}=2), and order is a mapping manner of the first time-frequency resource (for example, order=0 means mapping in frequency domain first and then in time domain, or order=1 means mapping in time domain first and then in frequency domain).

Optionally, the length of the sequence of the first signal corresponds to a quantity of resources included in the first time-frequency resource. For example, if the length of the sequence of the first signal is 12, the quantity of resources of the first time-frequency resource in frequency domain is 6, and the quantity of resources of the first time-frequency resource in time domain is 2. Alternatively, if the length of the sequence of the first signal is 12, the quantity of resources of the first time-frequency resource in frequency domain is 3, and the quantity of resources of the first time-frequency resource in time domain is 4.

The following further describes the pattern of the first time-frequency resource by using an example with reference to FIG. 8 to FIG. 10.

In a possible implementation, the first time-frequency resource includes at least two consecutive time-domain symbols and at least two consecutive subcarriers. Refer to FIG. 8.

FIG. 8 is another diagram of a pattern of a first time-frequency resource according to an embodiment of this application. As shown in FIG. 8, the first time-frequency resource includes two consecutive time-domain symbols and four consecutive subcarriers. The two consecutive time-domain symbols are a 6^{th} time-domain symbol and a 7^{th} time-domain symbol in one slot. The four consecutive subcarriers are a 4^{th} subcarrier to a 7^{th} subcarrier in one RB.

When the first time-frequency resource includes two consecutive time-domain symbols and four consecutive subcarriers, the first time-frequency resource includes eight REs. An RB corresponding to a first time-domain resource includes 168 REs. When the 168 REs are grouped by using eight REs as a unit, the RB includes 21 units, and each unit includes eight REs. Each unit corresponds to a same channel, or each RE in each unit corresponds to a same channel environment.

In this way, types and a quantity of patterns of the first time-frequency resource can be increased, so that more appropriate channel estimation can be performed on a time-frequency resource occupied for data transmission in a flexible, changing, and complex wireless environment.

In a possible implementation, a start time-domain symbol in the at least two consecutive symbols includes one or more time-domain symbols in one slot.

When the first time-domain resource includes at least two consecutive time-domain symbols, the at least two consecutive time-domain symbols may be any time-domain symbols in one slot. For example, the start time-domain symbol in the at least two consecutive time-domain symbols may be any one of a 1^{st} time-domain symbol to a 13^{th} time-domain symbol in one slot.

When a location of the start time-domain symbol in the at least two time-domain symbols in one slot is not limited, in embodiments of this application, construction of more patterns of time-domain resources used to carry the first signal is supported. This helps support appropriate channel estimation on a time-frequency resource occupied for data transmission in a flexible and changing channel environment.

The start time-domain symbol may be one time-domain symbol, or may be a plurality of time-domain symbols. This is not limited herein.

In this way, types and a quantity of patterns of the first time-frequency resource can be increased, so that more appropriate channel estimation can be performed on a time-frequency resource occupied for data transmission in a flexible, changing, and complex wireless environment.

In a possible implementation, an end time-domain symbol in the at least two consecutive symbols included in the first time-frequency resource includes one or more time-domain symbols in one slot.

When the first time-domain resource includes at least two consecutive time-domain symbols, the at least two consecutive time-domain symbols may be any time-domain symbols in one slot. For example, the end time-domain symbol in the at least two consecutive time-domain symbols may be any one of a 2^{nd} time-domain symbol to a 14^{th} time-domain symbol in one slot.

When a location of the end time-domain symbol in the at least two time-domain symbols in one slot is not limited, in embodiments of this application, construction of more patterns of time-domain resources used to carry the first signal is supported. This helps support appropriate channel estimation on a time-frequency resource occupied for data transmission in a flexible and changing channel environment.

The end time-domain symbol may be one time-domain symbol, or may be a plurality of time-domain symbols. This is not limited herein.

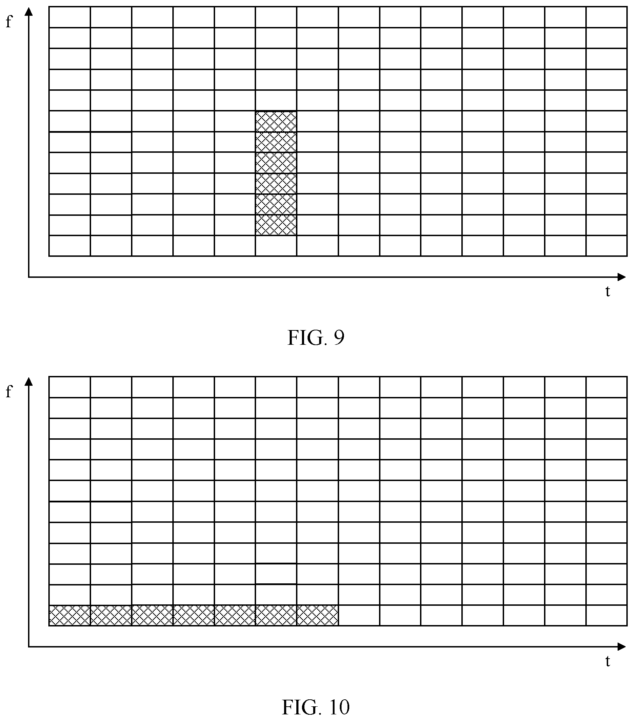

In a possible implementation, the first time-frequency resource includes one time-domain symbol and at least two consecutive subcarriers. Refer to FIG. 9.

FIG. 9 is still another diagram of a pattern of a first time-frequency resource according to an embodiment of this application. As shown in FIG. 9, the first time-frequency domain resource includes one time-domain symbol and six consecutive subcarriers. The six consecutive subcarriers are a 2^{nd} subcarrier to a 7^{th} subcarrier in one RB. The time-domain symbol is a 6^{th} time-domain symbol in one slot.

When the first time-frequency resource includes one time-domain symbol and six consecutive subcarriers, the first time-frequency resource includes six REs. An RB corresponding to a first time-domain resource includes 168 REs. When the 168 REs are grouped by using six REs as a unit, the RB includes 28 units, and each unit includes six REs. Each unit corresponds to a same channel, or each RE in each unit corresponds to a same channel environment (refer to the following descriptions of Formula (10) and Formula (11)).

In this way, types and a quantity of patterns of the first time-frequency resource can be increased, so that more appropriate channel estimation can be performed on a time-frequency resource occupied for data transmission in a flexible, changing, and complex wireless environment.

In a possible implementation, the first time-frequency resource includes one subcarrier and at least one consecutive time-domain symbol. Refer to FIG. 10.

FIG. 10 is yet another diagram of a pattern of a first time-frequency resource according to an embodiment of this application. As shown in FIG. 10, the first time-frequency resource includes one subcarrier and seven consecutive time-domain symbols. The seven consecutive time-domain symbols are a 1^{st} time-domain symbol to a 7^{th} time-domain symbol in one slot. The subcarrier is a 1^{st} subcarrier in one RB.

When the first time-frequency resource includes one subcarrier and seven consecutive time-domain symbols, the first time-frequency resource includes seven REs. An RB corresponding to a first time-domain resource includes 168 REs. When the 168 REs are grouped by using seven REs as a unit, the RB includes 24 units, and each unit includes seven REs. Each unit corresponds to a same channel, or each RE in each unit corresponds to a same channel environment.

In this way, types and a quantity of patterns of the first time-frequency resource can be increased, so that more appropriate channel estimation can be performed on a time-frequency resource occupied for data transmission in a flexible, changing, and complex wireless environment.

The first time-frequency resource may not be used to carry sequences of a plurality of signals. For example, a length of a sequence of one signal is 12. A sequence of a first signal is carried on a 0^{th} time-domain symbol, a 2^{nd} time-domain symbol, a 4^{th} time-domain symbol, a 6^{th} time-domain symbol, an 8^{th} time-domain symbol, a 10^{th} time-domain symbol, and a 12^{th} time-domain symbol (occupying seven time-domain symbols), and a sequence of a second signal is carried on a 1^{st} time-domain symbol, a 3^{rd} time-domain symbol, a 5^{th} time-domain symbol, a 7^{th} time-domain symbol, a 9^{th} time-domain symbol, an 11^{th} time-domain symbol, and a 13^{th} time-domain symbol (occupying seven time-domain symbols). A mapping manner is mapping in frequency domain first and then in time domain. Similarly, the sequence of the first signal may be carried on all time-domain symbols in one slot, and the sequence of the second signal may be carried on all time-domain symbols in one slot. However, a subcarrier corresponding to the sequence of the first signal is different from a subcarrier corresponding to the sequence of the second signal. For example, the sequence of the first signal is carried on a 0^{th} subcarrier, a 2^{nd} subcarrier, a 4^{th} subcarrier, a 6^{th} subcarrier, an 8^{th} subcarrier, a 10^{th} subcarrier, and a 12^{th} subcarrier (occupying six subcarriers), and the sequence of the second signal is carried on a 1^{st} subcarrier, a 3^{rd} subcarrier, a 5^{th} subcarrier, a 7^{th} subcarrier, a 9^{th} subcarrier, and an 11^{th} subcarrier (occupying six subcarriers).

In the foregoing manner, when one RB carries sequences of a plurality of signals, and time-frequency resources corresponding to the sequences of the signals do not overlap, refer to content shown in Table 10.

**Table 10**

| | |
|---|---|
| Two-stream | Sequence of a first signal: start time-domain symbol location=f0; Sequence of a second signal: start time-domain symbol location=f1, and f0 ≠ f1 Δf is a time-domain symbol interval subsequently occupied by the sequence, for example, f0 = 0, f1 = 1, Δf = 2 |
| Three-stream | f0 = 0, f1 = 1, f2 = 2, Δf = 3 |

As shown in Table 10:
➢ when one RB carries the sequence of the first signal and the sequence of the second signal, and a time-frequency resource carrying the sequence of the first signal and a time-frequency resource carrying the sequence of the second signal do not overlap, for example, a 1^{st} time-domain symbol carries the sequence of the first signal (occupying all corresponding REs), a 2^{nd} time-domain symbol carries the sequence of the second signal (occupying all corresponding REs), a 3^{rd} time-domain symbol carries the sequence of the first signal (occupying all corresponding REs), and a 4^{th} time-domain symbol carries the sequence of the second signal (occupying all corresponding REs); or
➢ when one RB carries the sequence of the first signal, the sequence of the second signal, and a sequence of a third signal, and a time-frequency resource carrying the sequence of the first signal, a time-frequency resource carrying the sequence of the second signal, and a time-frequency resource carrying the sequence of the third signal do not overlap, for example, a 1^{st} time-domain symbol carries the sequence of the first signal (occupying all corresponding REs), a 2^{nd} time-domain symbol carries the sequence of the second signal (occupying all corresponding REs), a 3^{rd} time-domain symbol carries the sequence of the third signal (occupying all corresponding REs), a 4^{th} time-domain symbol carries the sequence of the first signal (occupying all corresponding REs), a 5^{th} time-domain symbol carries the sequence of the second signal (occupying all corresponding REs), and a 6^{th} time-domain symbol carries the sequence of the third signal (occupying all corresponding REs).

When time-frequency resources carrying sequences of different signals are regularly distributed, a pattern of each time-frequency resource may be indicated in a manner shown in Table 10. This can effectively reduce signaling indication overheads.

In a possible implementation, the first time-frequency resource may be further used to carry a sequence of at least one second signal and at least one piece of second data, and the second signal is used to demodulate the second data.

When the first time-frequency resource is used to carry sequences of a plurality of signals, resource utilization of the first time-frequency resource can be improved.

A root sequence of the sequence of the first signal is different from a root sequence of the sequence of the second signal, or the sequence of the first signal and the sequence of the second signal are two different sequences.

In an example, the first signal is a DMRS, and a DMRS sequence is determined according to Formula (4): $r \left(n\right) = \frac{\sqrt{2}}{2} ∗ \left(1-2∗c\left(2n\right)\right) + \frac{\sqrt{2}}{2} j ∗ \left(1-2∗c\left(2n+1\right)\right)$ (4) where r(n) is a DMRS sequence, c(.) is a gold sequence with a length of 31 that is used to generate a pseudo-random sequence, and two m-sequences are defined: ${x}_{1} \left(n+31\right) = \left({x}_{1}\left(n+3\right)+{x}_{1}\left(n\right)\right) mod 2$ (5) ${x}_{2} \left(n+31\right) = \left({x}_{2}\left(n+3\right)+{x}_{2}\left(n+2\right)+{x}_{2}\left(n+1\right)+{x}_{2}\left(n\right)\right) mod 2$ (6)

Initialization of the first 31 values of the two sequences are performed according to the following: ${x}_{1} \left(n\right) = \left\{\begin{matrix}1 if n = 0 \\ 0 if 1 \leq n \leq 30\end{matrix}\right.$ (7) ${\sum }_{i = 0}^{30} {x}_{2} \left(i\right) ∗ {2}^{i} = {c}_{init}$ (8) where, ${c}_{init} = \left(\begin{matrix}{2}^{17} \left({N}_{symb}^{slot}{n}_{s , f}^{μ}+l+1\right) ∗ \left(2{N}_{ID}^{{n}_{SCID}^{\overline{λ}}}\right) + {2}^{17} \left⌊\frac{\overline{λ}}{2}\right⌋ + 2 {N}_{ID}^{{n}_{SCID}^{\overline{λ}}} + \\ {N}_{ID}^{{n}_{SCID}^{\overline{λ}}}\end{matrix}\right) mod 31$ (9) ${N}_{symb}^{slot}$ is a quantity of time-domain symbols in each slot, ${n}_{s , f}^{μ}$ is a quantity of slots in a frame f under a configuration of a subcarrier spacing of *µ*, *l* ∈ {0,1, ...,13}, a value of ${N}_{ID}^{{n}_{SCID}^{\overline{λ}}}$ is determined by scramblingID0/scramblingID1, and the value is an integer ranging from 0 to 65535. If scramblingID0/scramblingID1 is not configured, a cell ID may be used. Different values may be used to generate corresponding *cᵢₙᵢₜ*. In this case, a corresponding sequence *x*₂ and a same sequence *x*₁ may be generated, to complete calculation of c(.). Further, calculation of Formula (4) is completed to synthesize r(n) corresponding to scramblingID0/scramblingID1.

Finally, a bit sequence is generated according to Formula (10), and is substituted into Formula (4) to generate a DMRS sequence: $c \left(n\right) = \left({x}_{1}\left(n+1600\right)+{x}_{2}\left(n+1600\right)\right) mod 2$ (10)

When the first time-frequency resource is used to carry the sequence of the at least one second signal, for example, the first time-frequency resource carries both the sequence of the first signal and the sequence of the second signal, a length of the sequence of the first signal is 12, and a length of the sequence of the second signal is 12. In embodiments of this application, a channel can be jointly demodulated by using a correlation between the sequence of the first signal and the sequence of the second signal.

In an example, the sequence of the first signal is r1, the sequence of the second signal is r2, and r1 and r2 are correlated: ${\left(r1\right)}^{H} ⊙ r 2 \approx 0$ (11) where (·)^{H} represents a conjugate transposition operation, and ⊙ represents a vector inner product.

For each port, for example, when a channel of a port 1000 is demodulated, 12 subcarriers are required to jointly demodulate the channel, and a result thereof is divided by 12: $H_port 1000 _est = \frac{y ∗ {\left(r1\right)}^{H}}{12}$ (12)

Specifically, y is a received signal corresponding to the port 1000, and r2 may be removed and r1 is retained by using a correlation between r1 and r2. Therefore, for channels of a same port, different sequences may correspond to different demodulation results.

In embodiments of this application, the first data corresponds to a first layer, the second data corresponds to a second layer, and the first layer is different from the second layer. In this way, in embodiments of this application, appropriate channel estimation in a two-stream scenario can be supported.

In embodiments of this application, the first time-frequency resource is located in one or more RBs corresponding to the first time-domain resource, and the first time-domain resource includes one or more time-domain symbols in one or more slots.

When the first time-domain resource includes one or more time-domain symbols in one slot, the first time-frequency resource is located in one RB. When the first time-domain resource includes a plurality of slots, the first time-frequency resource is located in a plurality of RBs. When the first time-frequency resource is located in one or more RBs, a specific location of the first time-frequency resource is not limited in this application.

In this way, types and a quantity of patterns of the first time-frequency resource can be extended, so that more appropriate channel estimation can be performed on a time-frequency resource occupied for data transmission in a flexible, changing, and complex wireless environment, thereby improving accuracy of channel estimation.

S502: The second apparatus sends the first information to the first apparatus.

Correspondingly, the first apparatus receives the first information.

S503: The first apparatus determines the information about the first time-frequency resource based on the first information.

For descriptions that the first apparatus determines the information about the first time-frequency resource based on the first information, refer to Table 1 to Table 6. Details are not described again.

In the foregoing solution, the first signal and the first data may be carried on a same first time-frequency resource. The first apparatus may determine the sequence of the carried first signal based on the information about the first time-frequency resource, and can perform channel estimation based on the sequence of the first signal.

When the first time-frequency resource can be used to carry both the data and the sequence of the signal used for channel estimation, compared with a solution in which the first time-frequency resource can be used to carry only the data or the sequence of the signal used for channel estimation, a quantity and types of time-frequency resources that carry the sequence of the first signal can be extended, so that more appropriate channel estimation can be performed on a time-frequency resource occupied for data transmission in a flexible, changing, and complex wireless environment.

In a possible implementation, the method may further include the following step:
S504: The first apparatus performs channel estimation based on the first signal.

For specific descriptions, refer to an existing standard. Details are not described again.

In this way, the first apparatus may perform channel estimation by using the first signal, so that data demodulation on the first data can be supported.

Finally, apparatus embodiments in embodiments of this application are described.

To implement functions in the method provided in this application, the first apparatus and the second apparatus may each include a hardware structure and/or a software module, to implement the foregoing functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

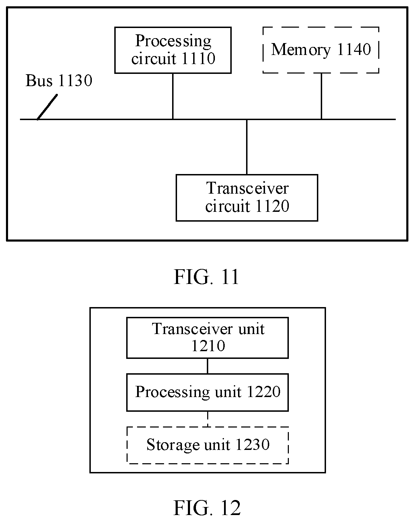

FIG. 11 is a diagram of a communication apparatus according to an embodiment of this application. The communication apparatus includes a processing circuit 1110 and a transceiver circuit 1120. The processing circuit 1110 and the transceiver circuit 1120 may be connected to each other or coupled to each other, for example, connected to each other through a bus 1130. The communication apparatus may be a first apparatus or a second apparatus.

Optionally, the communication apparatus may further include a memory 1140. The memory 1140 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1140 is configured to store related instructions and data. The processing circuit 1110 may be all or some processing circuits in one or more processors, or may be one or more processors. The processor may be a central processing unit (central processing unit, CPU). When the processing circuit 1110 is one CPU, the CPU may be a single-core CPU or a multi-core CPU. The processing circuit 1110 may be a signal processor, a chip, or another integrated circuit that can implement the method in this application, or a part of a circuit that is in the foregoing processor, chip, or integrated circuit and that is configured to perform a processing function. In addition, the transceiver circuit 1120 may alternatively be a transceiver or an input/output interface. The input/output interface is configured to input or output a signal or data, and may also be referred to as an input/output circuit.

When the communication apparatus is a first apparatus, for example, the processing circuit 1110 is configured to perform the following operations: receiving first information; determining information about a first time-frequency resource based on the first information; and the like.

When the communication apparatus is a second apparatus, for example, the processing circuit 1110 is configured to perform the following operations: determining first information, sending the first information, and the like.

The foregoing content is merely used as an example for description. When the communication apparatus is the first apparatus or the second apparatus, the communication apparatus is responsible for performing the methods or steps related to the first apparatus or the second apparatus in the foregoing method embodiments.

When the communication apparatus is the first apparatus or the second apparatus, the transceiver circuit 1120 may be a transceiver. When the communication apparatus is a chip used in the first apparatus or the second apparatus, the transceiver circuit 1120 may be an input/output circuit. The foregoing descriptions are merely examples for description.

For specific content, refer to the content shown in the foregoing method embodiments. For an implementation of the operations in FIG. 11, refer to the corresponding descriptions of the method embodiment shown in FIG. 5.

FIG. 12 is another diagram of a communication apparatus according to an embodiment of this application. The communication apparatus may be a first apparatus or a second apparatus, and is configured to implement the method in the foregoing embodiments.

The communication apparatus includes a transceiver unit 1210 and a processing unit 1220. The transceiver unit 1210 may include a sending unit and a receiving unit. The sending unit is configured to perform a sending action of the communication apparatus. The receiving unit is configured to perform a receiving action of the communication apparatus. For ease of description, in embodiments of this application, the sending unit and the receiving unit are combined into one transceiver unit. This applies throughout and will not be repeated below.

When the communication apparatus is a first apparatus, the transceiver unit 1210 is configured to receive first information and the like. The processing unit 1220 is configured to perform content related to steps such as processing and control of the first apparatus. For example, the processing unit 1220 is configured to determine information about a first time-frequency resource based on the first information.

When the communication apparatus is a second apparatus, the transceiver unit 1210 is configured to send first information and the like, and the processing unit 1220 is configured to determine the first information and the like. The processing unit 1220 is configured to perform content related to steps such as processing and control of the second apparatus.

When the communication apparatus is the first apparatus or the second apparatus, the communication apparatus is responsible for performing one or more of the methods or steps related to the first apparatus or the second apparatus in the foregoing method embodiments.

Optionally, the communication apparatus further includes a storage unit 1230, and the storage unit 1230 is configured to store a program or code used to perform the foregoing methods.

It should be noted that the transceiver unit in FIG. 12 may correspond to the transceiver circuit in FIG. 11, and the processing unit in FIG. 12 may correspond to the processing circuit in FIG. 11.

The apparatus embodiments shown in FIG. 11 and FIG. 12 are used for implementing the content described in FIG. 5. For specific execution steps and methods of the apparatuses shown in FIG. 11 and FIG. 12, refer to the content described in the foregoing method embodiments.

This application further provides a chip. The chip includes a processor, configured to invoke instructions from a memory and run the instructions stored in the memory, to cause a communication device on which the chip is installed to perform the methods in the foregoing examples. The memory may be integrated into the chip, or located outside the chip.

This application further provides another chip, including an input interface, an output interface, and a processing circuit. The input interface, the output interface, and the processing circuit are connected to each other through an internal connection path. The processing circuit is configured to execute code in a memory. When the code is executed, the processing circuit is configured to perform the methods in the foregoing examples. Optionally, the chip further includes the memory. The memory is configured to store a computer program or the code. The input interface and the output interface may be independent of each other, or may be integrated into an input/output interface.

The processing circuit may be all or some processing circuits in one or more processors, or may be one or more processors.

This application further provides a processor, configured to be coupled to a memory, and configured to perform a method and a function related to the network device or the terminal device in any one of the foregoing embodiments.

Another embodiment of this application provides a computer program product including instructions. When the computer program product is run on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

It should be understood that in embodiments of this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor, or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than a limitative description, random access memories (random access memory, RAM) in a plurality of forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another appropriate type.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, a magnetic tape), an optical medium (for example, a DVD), or a semiconductor medium. The semiconductor medium may be a solid-state drive.

It should be understood that sequence numbers of the foregoing processes do not mean execution orders in various embodiments of this application. The execution orders of the processes should be determined based on functions and internal logic of the processes, and should not be construed as any limitation on the implementation processes of embodiments of this application.

A person of ordinary skill in the art may be aware that units and algorithm steps with reference to the examples described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In several embodiments provided in this application, it should be understood that the disclosed system, apparatus, and method may be implemented in other manners. For example, the described apparatus embodiment is merely an example. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units. In other words, may be located in one place, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for causing a computer device (which may be a personal computer, a server, a network device, or the like) to perform all or some of the steps of the methods described in embodiments of this application. The foregoing storage medium includes any medium that can store program code, for example, a USB flash disk, a removable hard disk, a read-only memory, a random access memory, a magnetic disk, or an optical disc.

A person of ordinary skill in the art may be aware that units and algorithm steps with reference to the examples described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

## Claims

1. A communication method, comprising:
receiving first information, wherein the first information indicates information about a first time-frequency resource, the first time-frequency resource is used to carry a sequence of a first signal and first data, and the first signal is used to demodulate the first data; and
determining the information about the first time-frequency resource based on the first information.

2. A communication method, comprising:
determining first information, wherein the first information indicates information about a first time-frequency resource, the first time-frequency resource is used to carry a sequence of a first signal and first data, and the first signal is used to demodulate the first data; and
sending the first information.

3. The method according to claim 1 or 2, wherein the first information comprises at least one of the following:
identification information of a pattern of the first time-frequency resource;
length information of the sequence of the first signal;
information obtained by compressing the pattern of the first time-frequency resource;
a mapping relationship between the first time-frequency resource and the sequence of the first signal;
a start location corresponding to the first time-frequency resource;
an end location corresponding to the first time-frequency resource;
a quantity of resources of the first time-frequency resource in frequency domain; or
a quantity of resources of the first time-frequency resource in time domain.

4. The method according to claim 3, wherein the mapping relationship between the first time-frequency resource and the sequence of the first signal comprises:
mapping in frequency domain first and then in time domain, or mapping in time domain first and then in frequency domain.

5. The method according to any one of claims 1 to 4, wherein
the first time-frequency resource comprises at least two consecutive time-domain symbols and at least two consecutive subcarriers; or
the first time-frequency resource comprises one time-domain symbol and at least two consecutive subcarriers; or
the first time-frequency resource comprises one subcarrier and at least one consecutive time-domain symbol.

6. The method according to claim 5, wherein
a start time-domain symbol in the at least two consecutive time-domain symbols comprises one or more time-domain symbols in one slot; or
an end time-domain symbol in the at least two consecutive time-domain symbols comprises one or more time-domain symbols in one slot.

7. The method according to any one of claims 1 to 6, wherein the first time-frequency resource is further used to carry a sequence of at least one second signal and at least one piece of second data, a root sequence of the sequence of the first signal is different from a root sequence of the sequence of the second signal, and the second signal is used to demodulate the second data.

8. The method according to claim 7, wherein the first data corresponds to a first layer, the second data corresponds to a second layer, and the first layer is different from the second layer.

9. The method according to any one of claims 1 to 8, wherein the first time-frequency resource is located in one or more resource blocks corresponding to a first time-domain resource, and the first time-domain resource comprises one or more time-domain symbols in one or more slots.

10. The method according to any one of claims 1 to 9, wherein the first data comprises at least one of control data and user data.

11. The method according to any one of claims 1 or 3 to 10, wherein the method further comprises:
receiving a reference signal; and
sending measurement information of the reference signal, wherein an association relationship exists between the first information and the measurement information of the reference signal.

12. The method according to any one of claims 2 to 10, wherein the method further comprises:
sending a reference signal; and
receiving measurement information of the reference signal, wherein an association relationship exists between the first information and the measurement information of the reference signal.

13. A communication apparatus, comprising a processing circuit, wherein the processing circuit is configured to cause, by executing a computer program or instructions
or by using a hardware circuit, the communication apparatus to perform the method according to any one of claims 1 to 12.

14. A communication apparatus, comprising a logic circuit and an input/output interface, wherein the input/output interface is configured to input and/or output a signal, and the logic circuit is configured to perform the method according to any one of claims 1 to 12.

15. A communication apparatus, comprising a processing circuit, wherein the processing circuit is configured to cause, by executing a computer program or instructions or through a logic circuit, the communication apparatus to perform the method according to any one of claims 1 to 12.

16. A computer-readable storage medium, wherein the computer-readable storage medium stores a computer program or instructions, and when the computer program or the instructions are run on a computer, the method according to any one of claims 1 to 12 is performed.

17. A computer program product, comprising instructions, wherein when the instructions are run on a computer, the method according to any one of claims 1 to 12 is performed.

18. A chip system, comprising a processor, wherein the processor is configured to execute a computer program or instructions in a memory, to cause the chip system to implement the method according to any one of claims 1 to 12.
